# EUROPEAN PATENT SPECIFICATION

(11) **EP 3 476 620 B1**
(45) Date of publication and mention of the grant of the patent: **08.07.2020**
(21) Application number: 18200856.5
(22) Date of filing: 17.10.2018
(51) Int. Cl.: B60B 1/04, B60B 27/02, B29C 70/86

(54) **SPOKE-ATTACHMENT FLANGE FOR A HUB FOR A BICYCLE WHEEL AND HUB FOR A BICYCLE WHEEL INCLUDING SUCH A FLANGE**
SPEICHENBEFESTIGUNGSFLANSCH FÜR EINE NABE FÜR EIN FAHRRADRAD UND NABE FÜR EIN FAHRRADRAD MIT SOLCH EINEM FLANSCH
BRIDE DE FIXATION DE RAYON POUR LE MOYEU D'UNE ROUE DE BICYCLETTE ET MOYEU POUR ROUE DE BICYCLETTE COMPRENANT UNE TELLE BRIDE

(30) Priority: 27.10.2017 IT 201700122363
(43) Date of publication of application: 01.05.2019
(73) Proprietor: Campagnolo S.r.l., 36100 Vicenza (VI) (IT)
(72) Inventor: FELTRIN, Mauri, I-36024 Nanto (Vicenza) (IT)
(74) Representative: Porta & Consulenti Associati S.p.A.

(56) References cited:
- US-A1- 2002 038 972
- US-A1- 2006 145 530
- US-A1- 2008 054 715
- US-A1- 2014 239 708

## Description

The present invention relates to a spoke-attachment flange for a hub for a bicycle wheel.

In particular, the flange of the invention is made of a composite material.

Throughout the present description and in the following claims the term "composite material" is used to indicate a material comprising structural fibers incorporated in a polymeric material. The structural fibers are preferably selected from the group comprising carbon fibers, glass fibers, boron fibers, aramid fibers, ceramic fibers and combinations thereof. The polymeric material can be thermoplastic or thermosetting.

The invention also relates to a hub for a bicycle wheel including such a flange.

The aforementioned wheel can be a front wheel or a rear wheel of the bicycle. Such a bicycle can be a mountain-bike or a urban bicycle or a racing bicycle.

As known, a bicycle wheel comprises a plurality of spokes extending between the hub, which is the central element of the wheel configured to be associated with the frame of the bicycle, and the rim on which the tyre is mounted.

The hub comprises a substantially tubular body (hereinafter indicated as "hub body") comprising, at each of the opposite free end portions thereof, a spoke-attachment flange.

Spokes with a straight head and spokes with a curved head are known. In spokes with a straight head the end portion which attaches to the hub extends coaxially to the longitudinal axis of the elongated body of the spoke, whereas in spokes with a curved head the end portion which attaches to the hub is curved, namely it extends along a direction inclined by a predetermined angle with respect to the longitudinal axis of the elongated body of the spoke.

Hubs are known in which the hub body and the flanges are made of metallic material, for example aluminum, or in which the hub body and/or the spoke-attachment flanges are made of a composite material. Examples of this last type of hub are described in EP 2960072A1 and US 2002/0043873. Such hubs are used with spokes with curved head.

In particular, EP 2960072A1 discloses a hub comprising two opposite spoke-attachment flanges including a plurality of seats - equally spaced circumferentially- for housing spokes with a curved head.

Each spoke-attachment flange is made, by an injection molding process, by suitably arranging strips 1106 of reinforcing fibers in a half-mold 1102 comprising a cavity 1006 having an a shape analogous to that of the flange to be made and a plurality of pins 1010 that define the attachment seats for the heads of the spokes.

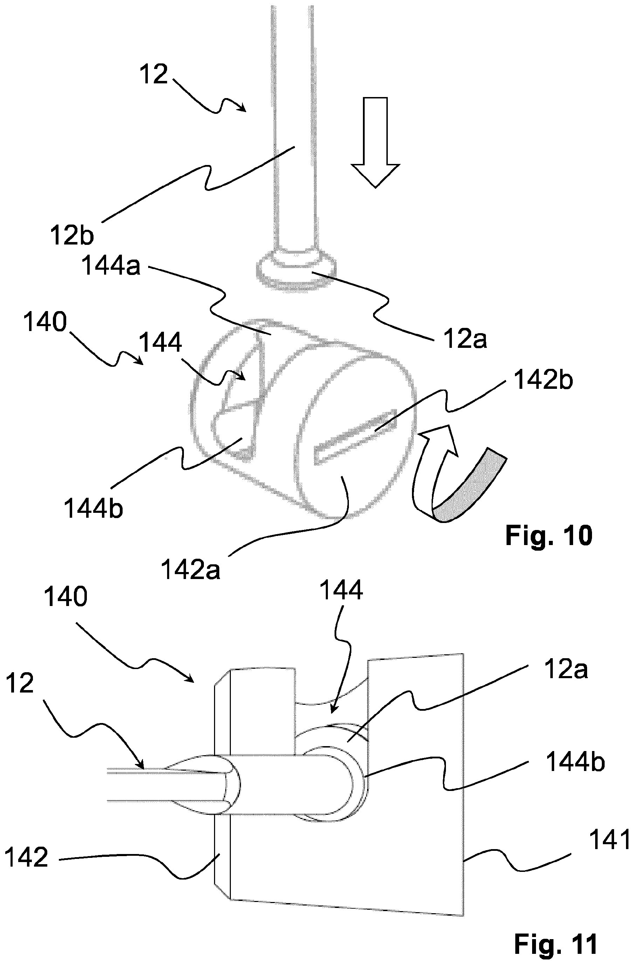

As illustrated in Fig. 11, the strips 1106 of reinforcing fibers are wound in a substantially circumferential direction passing alternately above and below the pins 1010. In particular, the winding of the strips 1106 is carried out so as to have, in a radially outer position with respect to some pins 1010, two strips 1106 of axially adjacent reinforcing fibers, in a radially outer position with respect to the other pins, a single strip 1106 of reinforcing fibers and, in the flange portions arranged between two circumferentially consecutive pins 1010, three strips 1106 of axially adjacent reinforcing fibers.

Throughout the present description and in the following claims, the term "axial", "axially" and similar terms are used to refer to a direction substantially coinciding with or substantially parallel to the rotation axis of the flange or of the hub, the term "radial", "radially" and similar terms are used to refer to a direction perpendicular to the rotation axis of the flange or of the hub, and the term "circumferential", "circumferentially" and similar terms are used to refer to a circumferential direction around the rotation axis of the flange or of the hub.

The terms "axially inner" and "axially outer" and similar terms are used to refer to positions respectively closer to, and farther from, a middle transversal plane of the hub, whereas the terms "radially inner" and "radially outer" and similar terms are used to refer to positions respectively closer to, and farther from, the rotation axis of the flange or of the hub.

The terms "rear", "rearward" and similar terms are used to refer to a side facing towards the middle transversal plane of the hub, whereas the terms "front", "frontally" and similar terms are used to refer to a side facing the opposite way with respect to the middle transversal plane in the hub, namely the side seen from an axially outer position with respect to the hub.

The Applicant has observed that in the spoke-attachment flanges, the flange portion that is most stressed upon tensioning the spokes is the radially outer annular portion of the flange, and in particular the areas of such a radially outer annular portion defined at the spoke attachment seats. In the specific case of the flange of EP 2960072A1, such areas are those defined in radially outer position with respect to the pins 1010.

The Applicant has noted that, due to the particular winding configuration of the strips 1106 of structural fibers illustrated in figure 11, the flange of EP 2960072A1 has a structural resistance to traction stresses caused by the tensioning of the spokes greater at some spoke-attachment seats (where there are two strips 1106 of reinforcing fibers) and lower at the other spoke-attachment seats (where a single strip 1106 of reinforcing fibers is provided), and in any case always less than at the flange portions arranged between each pair of axially adjacent attachment seats (where there are three strips 1106 of reinforcing fibers).

Therefore, according to the Applicant, the spoke-attachment flange of EP 2960072A1 is not optimized to offer the maximum structural resistance to traction stresses caused by the tensioning of the spokes. The document US 2006/145530 discloses a spoke-attachment flange for a hub according to the preamble of claim 1.

The Applicant indeed believes that in order to maximize the structural resistance of the flange to traction stresses caused by the tensioning of the spokes it is advisable to provide, at each of the spoke-attachment seats, an amount of reinforcing fibers greater than that provided at the areas defined between the various spoke-attachment seats.

The present invention therefore relates, in a first aspect thereof, to a spoke-attachment flange for a hub for a bicycle wheel, said flange comprising an annular body made of a composite material and extending coaxially to a rotation axis, said annular body comprising:
- a radially outer annular portion including a plurality of unidirectional structural fibers incorporated in a polymeric material and oriented along a substantially circumferential direction;
- a plurality of seats configured to house enlarged heads of spokes;
- a plurality of interconnection areas devoid of said seats, each of said interconnection areas being circumferentially arranged between two respective seats;
   characterized in that said radially outer annular portion include, at each of said seats, a number of radially juxtaposed layers of said unidirectional structural fibers greater than the number of layers of said unidirectional structural fibers provided at each of said interconnection areas.

Advantageously, the flange of the invention has, in the radially outer annular portion thereof, a number of radially juxtaposed layers of unidirectional structural fibers arranged in a substantially circumferential direction that is greater at each of the spoke-attachment seats, precisely where the flange is more stressed by traction upon tensioning the spokes, and lower at the flange portions where spoke-attachment seats are not provided, i.e. where the flange is less stressed by traction. Such a flange therefore has a distribution of unidirectional structural fibers that is optimized to offer the maximum structural resistance to traction stresses caused by the tensioning of the spokes.

The provision of a lower amount of unidirectional structural fibers in the flange portions in which spoke-attachment seats are not provided also makes it possible to achieve a reduction of the manufacturing costs when the overall structural strength is equal.

The spoke-attachment flange of the invention can comprise, individually or in combination, one or more of the following preferred features.

Preferably, said annular body comprises a radially inner annular portion including at least one first layer of unidirectional structural fibers incorporated in a polymeric material and oriented along a first direction inclined with respect to said rotation axis and at least one second layer of unidirectional structural fibers incorporated in a polymeric material and oriented along a second direction inclined with respect to said rotation axis the opposite way with respect to said first direction.

The Applicant believes that such a particular orientation of structural fibers in the radially inner annular portion of the flange is most suitable for effectively counteracting the stresses which such a flange portion is subjected to during use.

Preferably, said annular body comprises an intermediate annular portion radially arranged between said radially inner annular portion and said radially outer annular portion and comprising at least one layer of unidirectional structural fibers incorporated in a polymeric material and oriented along a path comprising first circumferential parts adjacent to said radially inner annular portion, second circumferential parts adjacent to said radially outer annular portion and third parts which connect said first circumferential parts and second circumferential parts, wherein said seats are each defined between one of said second parts, two of said third parts and a respective circumferential part of said radially inner annular portion.

The spoke-attachment seats are in this way completely surrounded by unidirectional structural fibers oriented, in each area around the seats, along the direction in which the stresses which that area is subjected to are maximum.

Preferably, said annular body comprises a rear face including at least one layer of unidirectional structural fibers incorporated in a polymeric material and oriented along respective substantially radial directions.

The Applicant believes that such a particular orientation of structural fibers in the rear face of the flange is that most suitable for effectively counteracting the stresses which such a rear face is subjected to during use.

Preferably, said annular body comprises a plurality of weight-reducing through openings, each of which is arranged in a respective interconnection area.

More preferably, said weight-reducing through openings are each defined between one of said first parts, two of said third parts and a respective part of said radially outer annular portion.

In preferred embodiments of the flange of the invention, said seats are configured to house spokes with a straight head. However, the flange of the invention can be used with spokes with a non-straight head, for example with a curved or L-shaped head.

Preferably, each of said seats comprises an axial cavity configured to house an enlarged head of a spoke.

Preferably, said axial cavity is blind.

Preferably, each of said seats further comprises a front opening made on a front face of said flange and that opens into said axial cavity.

Even more preferably, each of said seats comprises a radially outer opening made on said radially outer annular surface and that opens into said axial cavity.

In a first preferred embodiment of the flange according to the present invention, said radially outer opening is a first through hole having a first diameter such as to allow the passage of said enlarged head through said first through hole.

Throughout the present description and in the following claims, the term "hole" is used to refer to an opening delimited by a closed perimeter surface, typically a substantially cylindrical surface in the case of a circular hole.

In such an embodiment, the spokes are inserted/extracted into/from the seats through the aforementioned first through holes. Such a provision is particularly advantageous when the maneuvering space at the front face of the flange is reduced, due for example to the presence of a brake disc.

Preferably, said first diameter is greater than, or equal to, about 4.5 mm.

The enlarged heads of the spokes which can be used with the flange of the invention have, in this case, a diameter lower than the aforementioned first diameter, for example equal to about 4 mm.

Preferably, said first through hole extends in said radially outer annular portion along a substantially radial direction.

The direction of the first through hole is preferably contained in a radial plane, so that the flange can be used to obtain a bicycle wheel in which all the spokes have a radial arrangement, with a camber angle preferably comprised between about 1° and about 15°, with reference to a direction perpendicular to the rotation axis of the flange.

In a second preferred embodiment of the flange according to the present invention, said radially outer opening is a second through hole having a second diameter such as to prevent the passage of said enlarged head through said second through hole.

Preferably, in an axial (or longitudinal) section of the flange, said second through hole extends in said radially outer annular portion along a direction inclined with respect to a substantially radial direction by an angle comprised between about 1° and about 15°.

The direction of the second through hole is also in this case preferably contained in a radial plane, so that the flange can be used to obtain a bicycle wheel in which all the spokes have a radial arrangement.

In this case, the camber angle is preferably greater than the one adopted in the aforementioned first embodiment of the flange.

This is in order to facilitate the mounting and dismounting operations of the spokes in/from the flange. Indeed, in such an embodiment the spokes are inserted/extracted into/from the seats through the front opening provided on the front face of the flange. If the provision of a brake disc reduces the maneuvering space at the front opening of the flange such as to prevent carrying out the aforementioned mounting and dismounting operations, this particular embodiment of the flange is only used in those cases in which the use of a brake disc is not foreseen.

Preferably, said second diameter is lower than, or equal to, about 2.5 mm.

The enlarged heads of the spokes which can be used with the flange of the invention have, in this case, a diameter greater than the aforementioned second diameter, for example equal to about 4.0 mm.

In a third preferred embodiment of the flange according to the present invention, said radially outer opening is a slot extending from said front face and having a circumferential width such as to prevent the passage of said enlarged head.

Such a slot allows the insertion/extraction of the spokes into/from the seats through the front opening provided in the front face of the flange, without however requiring much maneuvering space. It is therefore possible to use a brake disc.

Preferably, said circumferential width is lower than, or equal to, about 2.5 mm.

The enlarged heads of the spokes which can be used with the flange of the invention have a diameter greater than said circumferential width, for example equal to about 4.0 mm.

Preferably, said slot extends along said radially outer annular surface in a substantially axial direction. In such a case the flange can be used to obtain a bicycle wheel in which all the spokes have a radial arrangement, with a camber angle that is preferably comprised between about 1° about 15°.

In a second aspect thereof, the invention relates to a hub for a bicycle wheel, comprising at least one spoke-attachment flange according to the first aspect of the present invention.

Preferably, the flange is of the type described above with reference to the aforementioned first preferred embodiment of the flange of the invention.

More preferably, the hub comprises a plurality of bushes each insertable in a respective axial cavity through said front opening and movable in said axial cavity between a first operative position wherein insertion/extraction of said enlarged head into/from the bush is allowed and a second operative position wherein extraction of said enlarged head from said seat is prevented.

The aforementioned "operative position wherein extraction is prevented" corresponds to a position wherein the spoke is locked in the seat upon tensioning of the spoke. Therefore, hereinafter the expression "spoke-locking position" will also be used to refer to the aforementioned "operative position wherein extraction is prevented".

Thanks to the provision of the bushes, the mounting and dismounting of the spokes is particularly easy, also when a brake disc is provided in a position adjacent to the front face of the flange. Indeed, as discussed above, the spokes can be inserted/extracted into/from the seats through the aforementioned first through holes.

The provision of the aforementioned bushes further allows the stress generated by the tensioning of each spoke to be distributed over a surface larger than that of the enlarged head of the spokes, thus avoiding undesired concentrations of tension in particular portions of the seats.

Furthermore, in the case of breaking, the spoke still remains connected to the hub whilst the bush remains in the spoke-locking operative position thereof, with clear advantages in terms of safety.

The hub of the invention can comprise, individually or in combination, one or more of the following preferred features.

Preferably, said bush is rotatable in said axial cavity between said first operative position and said second operative position.

Preferably, said axial cavity is blind.

Preferably, said bush comprises a slit extending along a substantially circumferential direction and comprising a first end portion configured to allow the insertion/extraction of said enlarged head into/from the bush and a second end portion circumferentially opposite to said first end portion and configured to prevent the extraction of said enlarged head from the bush.

Even more preferably, when said bush is in the first operative position thereof said through hole is substantially radially aligned with said first end portion and when said bush is in the second operative position thereof said through hole is substantially radially aligned with said second end portion.

Advantageously, the insertion/extraction of the spoke into/from the respective seat provided on the flange and the locking of the spoke in such a seat upon tensioning the spoke is achieved by simply imparting a rotary movement to the bush.

Preferably, said bush comprises a front surface provided with a housing configured to house a head of a maneuvering tool.

Preferably, said housing has a substantially parallelepiped shape, suitable for allowing for example the insertion of a flat-head screwdriver. Furthermore, the position of the housing can provide the operator with a visual indication that allows him/her to understand whether the bush is in the spoke insertion/extraction position or in the spoke-locking position.

Preferably, said axial cavity and said bush have a substantially frusto-conical shape.

Further features and advantages of the invention will become clearer from the description of some preferred embodiments thereof, made with reference to the attached drawings, where:
- figure 1 is a plan view of a semi-finished product for making a spoke-attachment flange for a hub for a bicycle wheel according to the present invention;
- figure 2 is an enlarged radial section of the semi-finished product of figure 1, taken according to the plane line II-II in figure 1;
- figure 3 is a top side view of the semi-finished product of figure 1;
- figures 4-6 are plan views of different strips of structural fibers used to make the semi-finished product of figures 1-3;
- figure 7 is a perspective view of a portion of a first embodiment of a hub for a bicycle wheel in accordance with the present invention and on which spokes with a straight head are mounted;
- figure 8 is a longitudinal (or axial) section of the hub of figure 7, on which spokes with a straight head are mounted;
- figure 9 is an enlarged longitudinal (or axial) section of a detail of the spoke-attachment flange used in the hub of figure 8, such a detail being enclosed by the dashed circumference indicated with IX in figure 8;
- figure 10 is a perspective view of a component (bush) of the hub of figure 7, on which a spoke with a straight head is about to be mounted;
- figure 11 is a plan view of the component of figure 10 on which the spoke with a straight head of figure 10 is mounted;
- figure 12 is a perspective view of a portion of a second embodiment of a hub for a bicycle wheel in accordance with the present invention and on which spokes with a straight head are mounted;
- figure 13 is a longitudinal (or axial) section of the hub of figure 12, on which spokes with a straight head are mounted;
- figure 14 is an enlarged longitudinal (or axial) section of a detail of the spoke-attachment flange used in the hub of figure 13, such a detail being enclosed by the dashed circumference indicated with XIV in figure 13;
- figure 15 is a perspective view of a portion of a third embodiment of a hub for a bicycle wheel in accordance with the present invention and on which spokes with a straight head are mounted;
- figure 16 is a longitudinal (or axial) section of the hub of figure 15, on which spokes with a straight head are mounted;
- figure 17 is an enlarged longitudinal (or axial) section of a detail of the spoke-attachment flange used in the hub of figure 16, such a detail being enclosed by the dashed circumference indicated with XVII in figure 16.

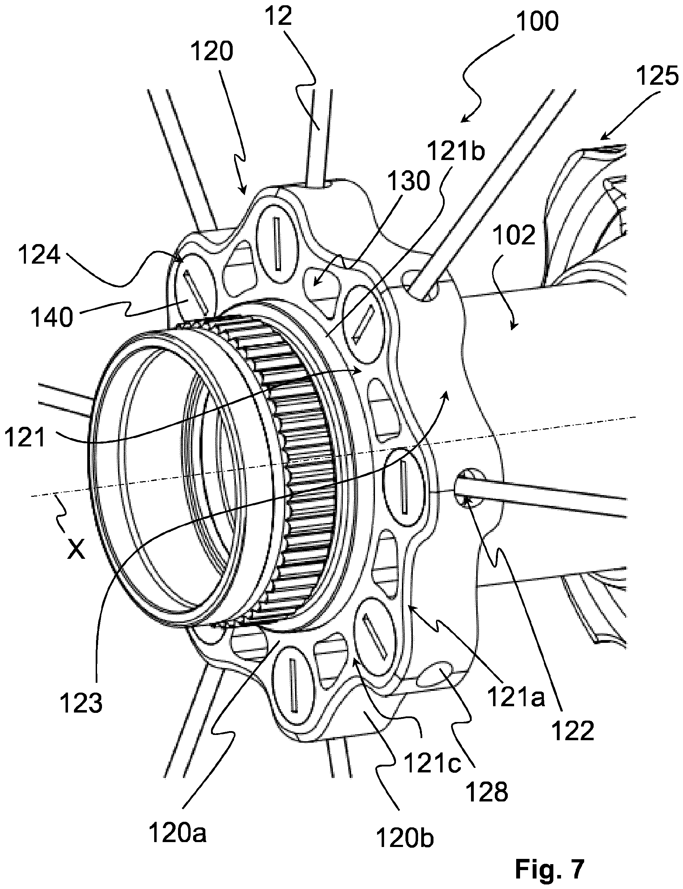

With initial reference to figures 7-11, reference numeral 100 wholly indicates a first embodiment of a hub for a bicycle wheel, such a hub including a first embodiment of a spoke-attachment flange 120 according to the present invention.

In particular, the hub 100 is a hub for a rear bicycle wheel.

The hub 100 comprises a substantially tubular body, or hub body, 102 inside which a shaft (not illustrated) is provided. Such a shaft is rotatably associated with the hub body 102 through suitable bearings (not illustrated) fitted onto the opposite free end portions of the shaft and is configured to be connected, at such opposite free end portions, to the frame of the bicycle.

The hub body 102 can be made of metallic material (for example aluminum) or composite material.

Spoke-attachment flanges 120, 125 are provided at each of the opposite free end portions of the hub body 102.

A plurality of spokes 12, described below, are mounted on the flange 120.

The hub 100 can also comprise a brake disc. In this case, the brake disc is mounted on the hub 100 in an axially outer position with respect to the flange 120.

The hub 100 is associated, in an axially outer position with respect to the flange 125, with a freewheel (not illustrated) configured to support a cassette of the rear gearshift of the bicycle. The freewheel is thus mounted on the hub 100 on the axially opposite side with respect to the possible brake disc.

The flange 120 is made of composite material.

Preferably, both of the flanges 120, 125 are made of composite material. More preferably, the hub body 102 is also made of composite material.

The spokes 12 mounted on the flange 120 are spokes with a straight head. In the non-limiting example of figure 7, the spokes 12 are radial spokes of the wheel, namely - when they are mounted on the wheel - they extend entirely in substantially radial planes, with more or less wide camber angles.

For example, the camber angle can be comprised between about 1° and about 15°, with reference to a direction perpendicular to the rotation axis X of the flange.

Each spoke 12 with a straight head comprises an enlarged head 12a and an elongated body 12b.

The enlarged head 12a has, in plan, a substantially circular shape.

The flange 120 comprises an annular body 121 that extends coaxially to a rotation axis X of the hub 100.

The annular body 121 comprises a radially outer annular portion 121a having a radially outer annular surface 120b that, in the specific example illustrated herein, extends circumferentially along a undulating trajectory.

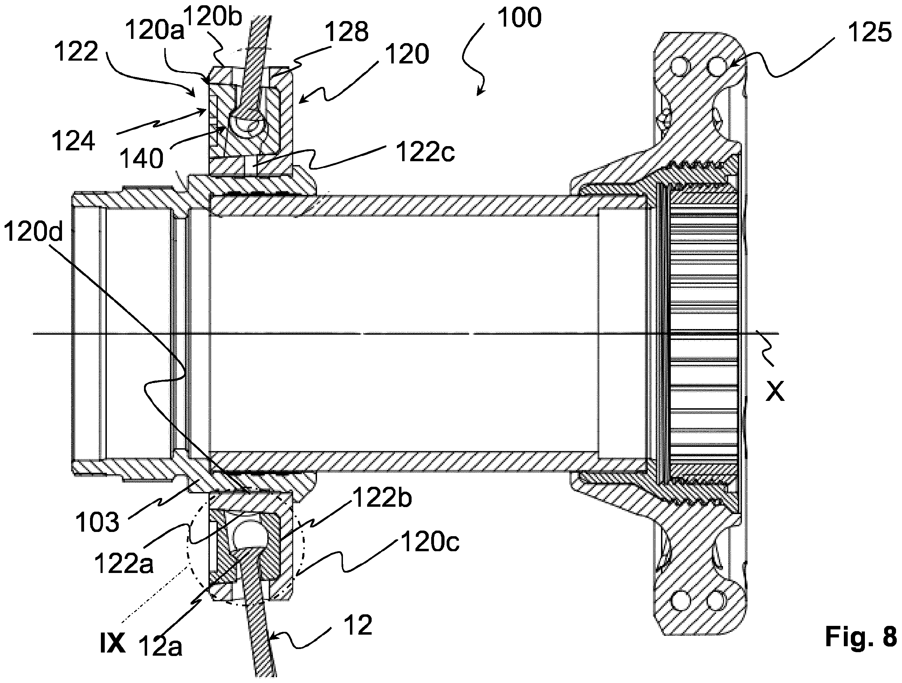

The annular body 121 further comprises a radially inner annular portion 121b having a radially inner annular surface 120d with a cylindrical shape and associated with the respective free end portion of the hub body 102 by interposing a cup 103 (figure 8).

The annular body 121 further comprises an intermediate annular portion 121c that extends radially between the radially inner annular portion 121b and the radially outer annular portion 121a.

At the aforementioned intermediate annular portion 121c, the annular body 121 comprises a plurality of seats 122 configured to house the enlarged heads 12a of the spokes 12 with a straight head and a plurality of weight-reducing through openings 130, each of which is arranged between two circumferentially consecutive seats 122.

The seats 122 are equally spaced circumferentially. In the non-limiting example of figure 7, there are eight seats 122 equally spaced circumferentially from each other by 45°.

The through openings 130 are also equally spaced circumferentially. In the non-limiting example of figure 7, there are eight through openings 130 circumferentially spaced from each other by 45°.

Each seat 122 comprises a front opening 124 made on a front face 120a of the flange 120.

In the case in which the hub 100 is configured to support a brake disc, the latter is arranged coaxially to the rotation axis X in a position axially adjacent to the front face 120a.

Each front opening 124 is defined by a closed line (typically a circumference) that is radially spaced apart from the radially outer annular surface 120b. In particular, the front opening 124 is arranged entirely in the intermediate annular portion 121c of the annular body 121 of the flange 120.

Each seat 122 defines, in the intermediate annular portion 121c of the annular body 121, an axial cavity, preferably blind, 122a that extends substantially parallel to the rotation axis X between the front opening 124 and a rear face 120c of the flange 120 that is axially opposite to the front face 120a.

The axial cavity 122a has a substantially frusto-conical shape and is closed by a bottom wall 122b (figure 8).

Each seat 122 comprises a radially outer opening defined by a through hole 128 made on the radially outer annular surface 120b of the annular body 121. The through hole 128 is configured to allow the insertion/extraction into/from the seat 122 of the enlarged head 12a of the spoke 12. In particular, in the non-limiting example of figure 7, the through hole 128 is defined by a substantially cylindrical through opening having a diameter greater than that of the enlarged head 12a of the spoke 12.

Preferably, the diameter of the through hole 128 is greater than, or equal to, about 4.5 mm.

In order to avoid the risk of excessively weakening the flange 120, preferably the diameter of the through hole 128 is lower than about 5 mm.

In the non-limiting example of figures 7-11, the through hole 128 extends in the radially outer annular portion 121a of the annular body 121 along a substantially radial direction, so as to allow the insertion/extraction into/from the seat 122 of the enlarged head 12a along a substantially radial insertion/extraction direction and make a wheel wherein all the spokes extend along respective radial directions.

The through hole 128 crosses the radially outer annular portion 121a of the flange 120 along a substantially radial direction, until the axial cavity 122a is reached.

The flange 120 has at least one further through hole 122c that crosses the radially inner annular portion 121b of the flange 120 so as to make the axial cavity 122a of at least one seat 122 in communication with the radially inner surface 120d of the flange 120. Such a through hole 122c allows the passage of a glue. Such a glue is introduced into the seat 122 through the through hole 128 and reaches the radially outer surface of the hub body through the through hole 122c.

The through hole 122c preferably extends along a substantially radial direction and, more preferably, is radially aligned with the through hole 128.

The hub 100 comprises a plurality of bushes 140 configured to hold the enlarged head 12a of a respective spoke 12 in a respective seat 122.

Each bush 140 is inserted in the respective seat 122 of the flange 120 through the front opening 124.

The bush 140 has a substantially frusto-conical shape which matches the substantially frusto-conical shape of the axial cavity 122a (figure 8).

In the non-limiting example of figure 8, the bush 140 has an axial dimension substantially equal to the axial depth of the axial cavity 122a.

A first axial end portion 141 of the bush 140 goes into abutment on the bottom wall 122b of the axial cavity 122a.

A second axial end portion 142 of the bush 140 is accessible from outside the flange 120, when the bush 140 is mounted on the flange 120.

In the non-limiting example of figures 7 and 8, the second axial end portion 142 of the bush 140 is substantially flush with (or axially aligned with) the front face 120a of the flange 120.

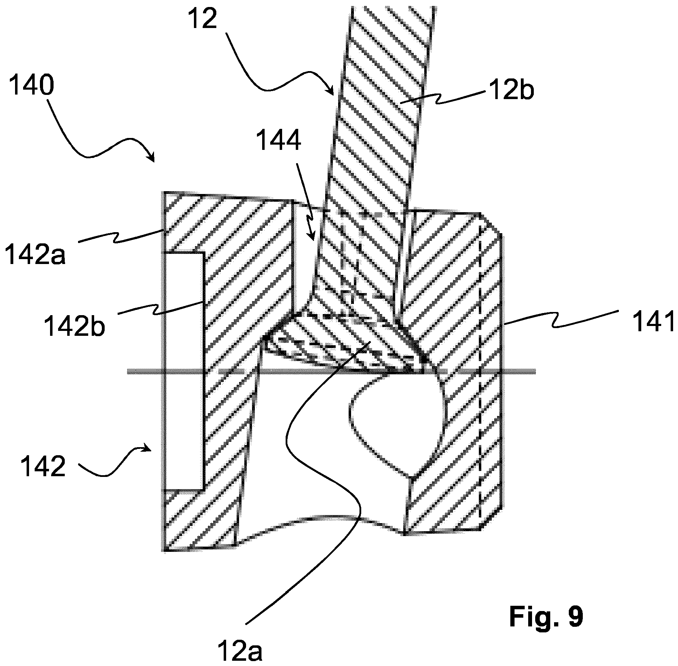

The bush 140 is rotatable in the seat 122 between a first operative position at which the insertion/extraction of the enlarged head 12a into/from the bush 140 is allowed (figure 10) and a second operative position at which, upon tensioning the spoke 12, the extraction of the enlarged head 12a from the seat 122 is prevented (figures 9 and 11).

The second axial end portion 142 comprises a front surface 142a provided with a housing 142b configured to house a head of a maneuvering tool (not illustrated).

In the non-limiting example of figures 7-11, the housing 142b has a substantially parallelepiped shape, suitable for allowing for example the insertion of a flat-head screwdriver.

The position of such a housing 142b provides the operator with a visual indication that allows him/her to understand whether the bush 140 is in the spoke insertion/extraction position or in the spoke-locking position.

For example, in the non-limiting example of figures 7-11, when the housing 142b of substantially parallelepiped shape is positioned with the larger side directed substantially in a radial direction it indicates that the bush 140 is in the spoke-locking position (like the bush 140 in the lower part of figure 8), whereas when the housing 142b is positioned with the larger side directed substantially in a circumferential direction it indicates that the bush 140 is in the spoke insertion/extraction position (like the bush 140 in the upper part of figure 8).

As clearly illustrated in the non-limiting example of figure 10, the bush 140 comprises a slit 144 extending along a substantially circumferential direction and comprising a first end portion 144a and a second end portion 144b circumferentially opposite the first end portion 144a.

The first end portion 144a is configured to allow the insertion/extraction of the enlarged head 12a into/from the bush 140. In particular, in the non-limiting example of figure 10, the first end portion 144a is partially defined by a substantially cylindrical surface having a diameter larger than (at most equal to) that of the enlarged head 12a of the spoke 12.

The second end portion 144b is configured to prevent the extraction of the enlarged head 12a from the bush 140. In particular, in the non-limiting example of figures 10 and 11, the second end portion 144b is partially defined by a substantially cylindrical surface having a diameter smaller than that of the enlarged head 12a of the spoke 12.

When the bush 140 is in the first operative position thereof the through hole 128 is substantially radially aligned with the first end portion 144a, whereas when the bush 140 is in the second operative position thereof the through hole 128 is substantially radially aligned with the second end portion 144b.

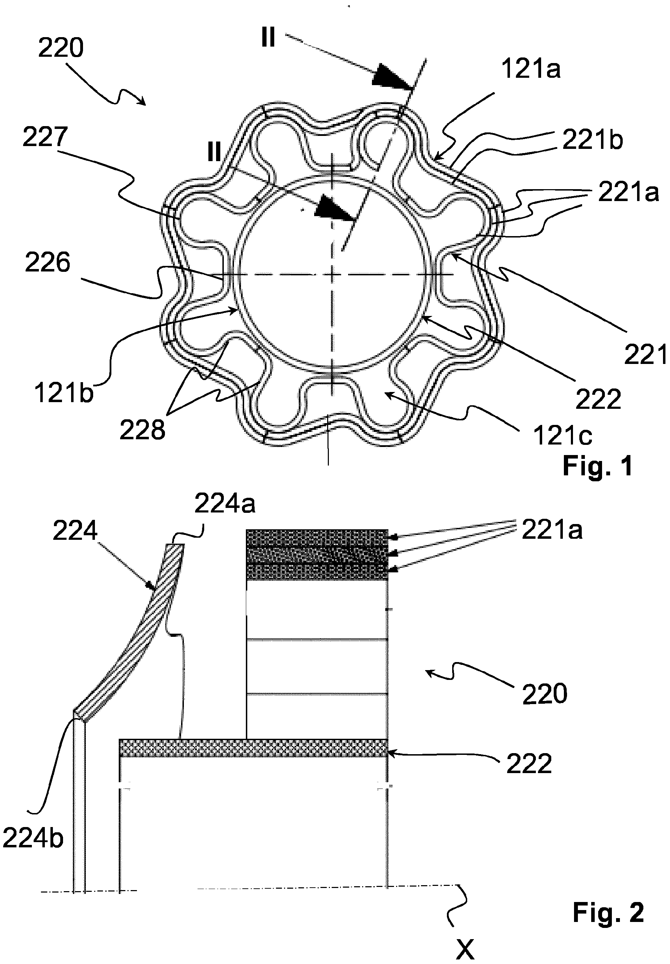

The flange 120 of figures 7 and 8 is obtained by a compression molding process starting from a semi-finished product, like for example the one indicated with 220 in figures 1-3.

The radially outer annular portion 121a of the annular body 121 of the flange 120 includes one or more radially juxtaposed layers of unidirectional structural fibers incorporated in a polymeric material and oriented along a substantially circumferential direction.

In the non-limiting example of figures 1 and 2, the radially outer annular portion 121a comprises two juxtaposed layers 221a of a strip 221 comprising for example four juxtaposed layers of unidirectional structural fibers incorporated in a polymeric material and oriented along the circumferential direction. Each structural fiber has a dry weight equal to about 150 g.

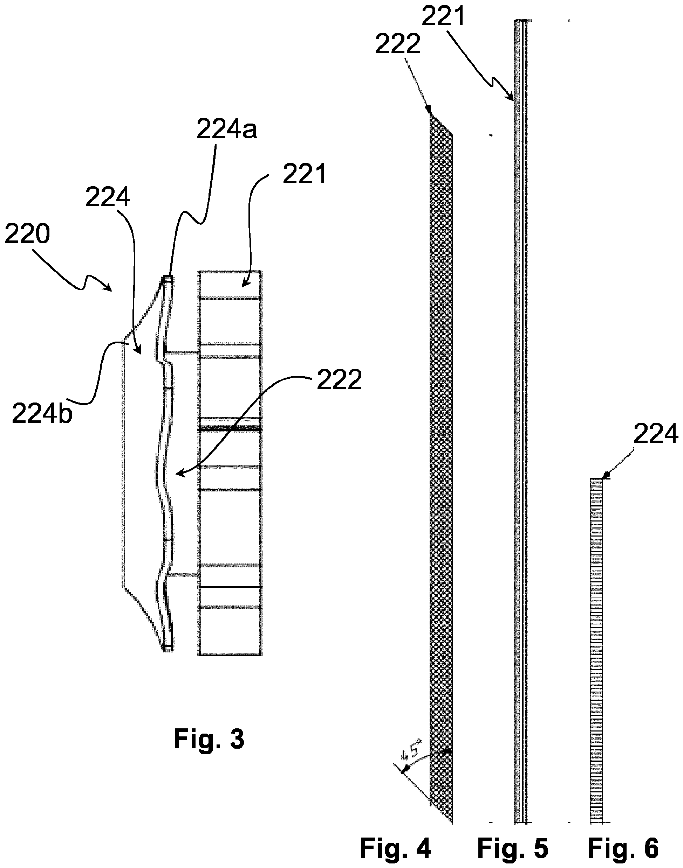

The strip 221 is shown in plan in figure 5. It has a length equal to about 700 mm, a width equal to about 10 mm and a thickness of about 7mm.

The radially inner annular portion 121b of the annular body 121 of the flange 120 includes one or more first layers of unidirectional structural fibers incorporated in a polymeric material and oriented along a first direction inclined with respect to the rotation axis X and at least one second layer of unidirectional structural fibers incorporated in a polymeric material and oriented along a second direction inclined with respect to the rotation axis X the opposite way with respect to the first direction. The aforementioned first layers are preferably radially juxtaposed, in an alternate manner, over the aforementioned second layers.

In the non-limiting example of figures 1 and 2, the radially inner annular portion 121b of the flange 120 comprises a strip 222 comprising for example four juxtaposed layers of unidirectional structural fibers incorporated in a polymeric material, wherein in a first layer the fibers are oriented at +45° with respect to the circumferential direction, in a second layer radially juxtaposed over the first layer the fibers are oriented at - 45° with respect to the circumferential direction, in a third layer radially juxtaposed over the second layer the fibers are oriented at +45° with respect to the circumferential direction and in a fourth layer radially juxtaposed over the third layer the fibers are oriented at -45° with respect to the circumferential direction. Each structural fiber has a dry weight equal to about 150 g.

The strip 222 is shown in plan in figure 4. It has a length equal to about 600 mm, a width equal to about 19 mm and a thickness equal to about 1 mm.

The intermediate annular portion 121c of the annular body 121 of the flange 120 includes one or more layers of unidirectional structural fibers incorporated in a polymeric material and preferably lying in planes substantially perpendicular with respect to the rotation axis X. Such unidirectional structural fibers are oriented along a path comprising first circumferential parts 226 adjacent to the radially inner annular portion 121b, second circumferential parts 227 adjacent to the radially outer annular portion 121a and third parts 228 which connect the first circumferential parts 226 and second circumferential parts 227.

The seats 122 are each defined between one of the second parts 227, two of the third parts 228 and a respective circumferential part of the radially inner annular portion 121b, whereas the weight-reducing through openings 130 are each defined between one of the first parts 226, two of the third parts 228 and a respective circumferential part of the radially outer annular portion 121a (figure 1).

The rear face 120c of the annular body 121 of the flange 120 includes one or more layers of unidirectional structural fibers incorporated in a polymeric material and oriented along respective substantially radial directions, namely along directions substantially perpendicular to the circumferential direction.

The intermediate annular portion 121c of the flange 120 comprises an initial portion of the same strip 221 used in the radially outer annular portion 121a of the flange 120.

In the non-limiting example of figures 1 and 2, the rear face 120c of the flange 120 comprises a strip 224 comprising unidirectional structural fibers incorporated in a polymeric material and oriented in the radial direction. Such fibers are arranged, for example, in four juxtaposed layers. Each structural fiber has a dry weight equal to about 150 g.

The strip 224 is shown in plan in figure 6. It has a length equal to about 300 mm, a width equal to about 10 mm and a thickness equal to about 0.7 mm.

In an embodiment that is not illustrated, the flange 120 according to the invention (and consequently also the semi-finished product 220) can also comprise a plurality of structural fibers incorporated in a matrix of polymeric material and arranged between the radially inner portion 121b and the plurality of seats 122 and of through openings 130. Such structural fibers can be arranged randomly or with a cross-over orientation.

The semi-finished product 220 is formed by initially winding the strip 222 on a spindle, with axis of the spindle parallel to the width of the strip 222.

The spindle is subsequently positioned in a half-mold.

A plurality of pins (which in the specific case illustrated herein have a frusto-conical shape) configured to define seats 122 and a plurality of shaped elements configured to define the through openings 130 are arranged on the half-mold, in a radially outer position with respect to the aforementioned spindle.

Thereafter, an initial portion of the strip 221 is arranged with its width parallel to the axis of the spindle and is made to pass only once in a radially inner position with respect to the aforementioned shaped elements and in a radially outer position with respect to the aforementioned pins until a revolution is completed around the spindle. The remaining portion of strip 221 is then wound twice around the spindle by resting it on the portions of strip 221 previously deposited. In this way, three juxtaposed layers 221a of structural fibers are obtained in a radially outer position with respect to the pins and two juxtaposed layers 221b of structural fibers are obtained in a radially outer position with respect to the aforementioned shaped elements.

Finally, the strip 224 is closed in a loop around the axis of the spindle, the radially outermost edge 224a thereof is shaped in an analogous manner to the radially outermost edge of the strip 221 previously deposited and the radially innermost edge 224b of the strip 224 is rested on the spindle, as illustrated in figures 2 and 3.

Then the half-mold is closed and the compression molding operation is carried out, so as to form the flange 120.

The through hole 128 is generally made at each seat 122 by a subsequent drilling mechanical processing.

The hub body 102 can be made of composite material, by winding layers of structural fiber on a cylindrical spindle. The first layers can comprise structural fibers with woven fabric, whereas the final layers can comprise unidirectional structural fibers incorporated in a polymeric material and oriented at +/-60° with respect to the rotation axis X of the hub 100.

The mounting of the spokes 12 on the flange 120 associated with the hub 100 of figure 7 takes place by introducing the enlarged heads 12a of the spokes 12 in the through holes 128. Beforehand, the bushes 140 were inserted in the seats 122 and positioned so as to radially align the end portions 144a of the bushes 140 with the through holes 128. The enlarged head 12a of each spoke 12 can thus be inserted in the bush 140.

Each bush 140 is subsequently rotated until the spoke-locking position is reached.

At this point the tensioning of the spokes 12 takes place.

Following the tensioning of the spokes 12, the bushes 140 remain locked in the respective positions due to the friction between the matching frusto-conical surfaces of the bush 140 and of the axial cavity 122a of the seat 122.

If the spoke 12 breaks, it is held in its seat 122 by the bush 140 as long as such a bush 140 remains in the aforementioned spoke-locking position.

In order to dismount the spoke 12, it is necessary to rotate the bush 140 until the spoke insertion/extraction position is reached. At this point, the spoke 12 can be withdrawn from the bush 140 and from the seat 122 through the through hole 128.

The hub of the invention can also be used in a bicycle front wheel, possibly also provided with a brake disc.

Both in the case of a hub for a rear wheel and in the case of a hub for a front wheel, the flange 125 can be identical to the flange 120. In the specific example described and illustrated herein the flange 125 is different from the flange 120. In particular, the flange 125 has a plurality of seats for the attachment of spokes with a curved head.

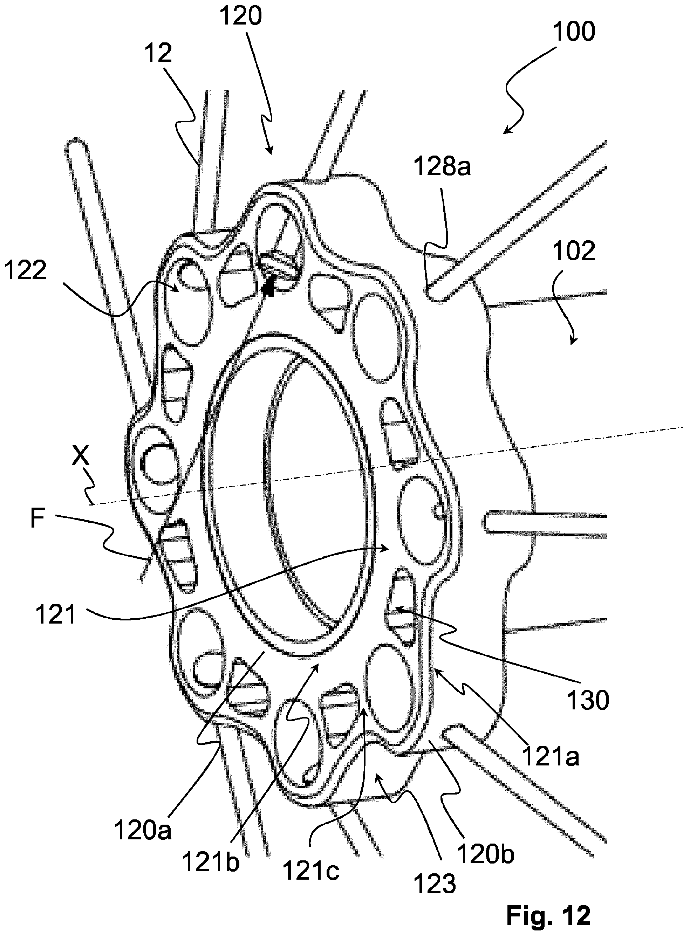

Figures 12-14 show a second embodiment of a spoke-attachment flange 120 according to the present invention.

The components of the flange 120 of figures 12-14 analogous or functionally equivalent to those of the flange 120 of figures 7-11 are indicated with the same reference numeral and their description is not repeated for the sake of brevity.

The flange 120 of figures 12-14 differs from the flange 120 of figures 7-11 substantially in that the radially outer opening of the seat 122 of the flange 120 of figures 12-14 is in this case a through hole 128a having a diameter such as to prevent the passage of the enlarged head 12a of the spoke 12 through the through hole 128a.

Preferably, the diameter of the through hole 128a is lower than, or equal to, about 2.5 mm.

In order to allow the passage of the elongated body 12b of the spoke 12, preferably the diameter of the through hole 128a is in any case greater than about 1.5 mm.

As shown in figures 12-14, in an axial (or longitudinal) section of the flange 120, the through hole 128a extends in the radially outer annular portion 121a of the annular body 121 along a direction inclined with respect to a substantially radial direction.

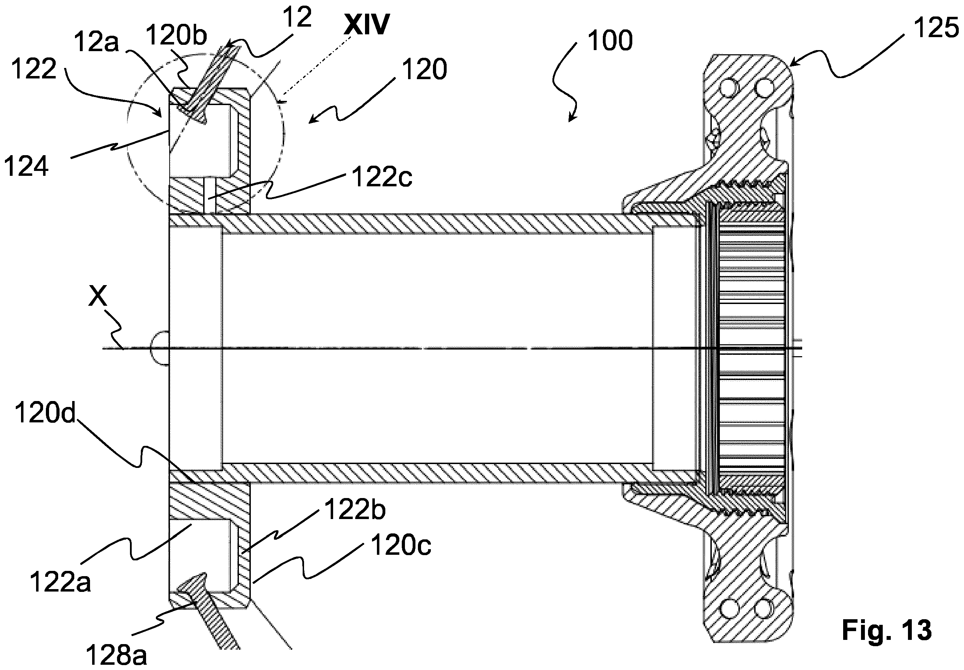

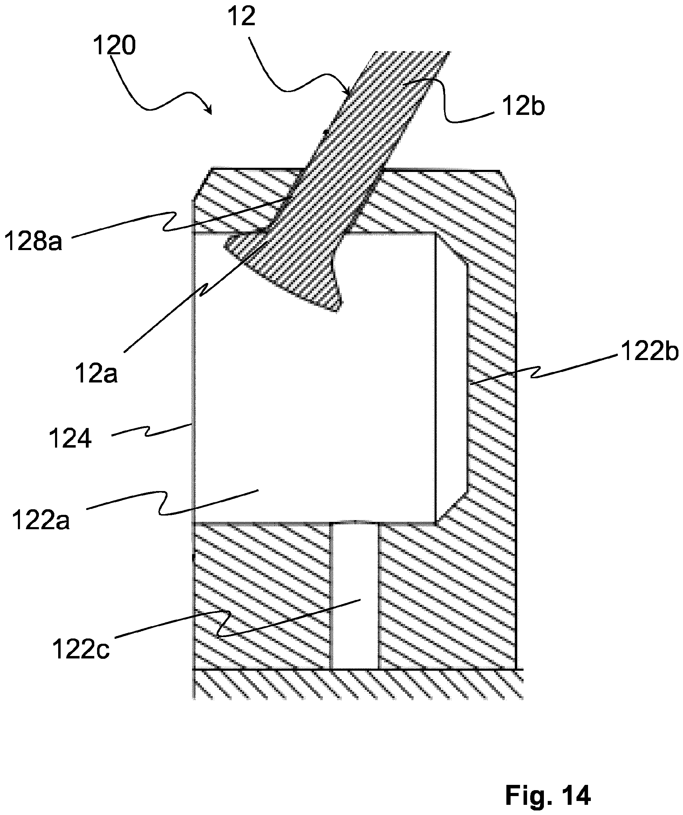

In each seat 122 of figures 12-14 the bush 140 used in the hub 100 of figures 7-11 is not used. The spoke 12 is indeed introduced/extracted into/from the front opening 124 of the seat 122, at first inserting the elongated body 12b of the spoke 12 so that it subsequently passes through the through hole 128a. Following the tensioning of the spoke 12, the enlarged head 12a abuts on the radially outer surface of the axial cavity 122a (figures 13 and 14). In figure 12 letter F indicates an arrow that shows the direction of insertion of the spoke 12 in the seat 122.

The direction of the through hole 128a is in any case contained in a radial plane.

The angle of inclination of the through hole 128a with respect to a substantially radial direction is comprised between about 1° and about 15°.

The spokes 12, once mounted in the flange 120 of the hub of figure 12, will have a camber angle greater than that of the spokes 12 mounted in the flange 120 of the hub of figure 7.

In this case, the bicycle wheel generally does not have any brake disc, which could reduce the maneuvering space at the front opening 124 of the flange 120.

The flange 120 of figures 12-14 is made starting from the same semi-finished product 220 of figures 1-3.

The only difference with respect to what is described above is the fact that, instead of making the through hole 128, the through hole 128a is made, which has a diameter smaller than that of the through hole 128. Also in this case, the through hole 128a is obtained by a drilling mechanical processing after the compression molding of the semi-finished product 220.

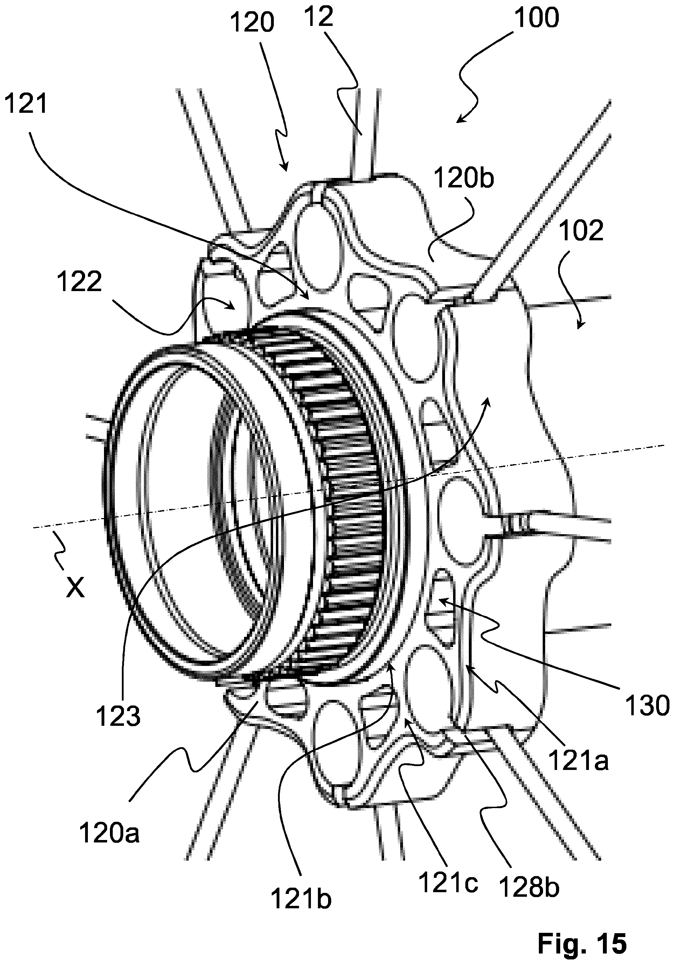

Figures 15-17 show a third embodiment of a spoke-attachment flange 120 according to the present invention.

The components of the flange 120 of figures 15-17 analogous or functionally equivalent to those of the flange 120 of figures 12-14 are indicated with the same reference numeral and their description is not repeated for the sake of brevity.

The flange 120 of figures 15-17 differs from the flange 120 of figures 12-14 substantially in that instead of making the through hole 128a on the radially outer annular surface 121a of the annular body 121, a slot 128b is made that extends from the front face 120a of the flange 120 and having a circumferential width such as to prevent the passage of the enlarged head 12a of the spokes 12.

Preferably, such a circumferential width is lower than, or equal to, about 2.5 mm.

In order to allow the passage of the elongated body 12b of the spoke 12, preferably the circumferential width of the slot 128b is in any case greater than about 1.5 mm.

The slot 128b extends along the radially outer annular surface 120b of the flange 120 in a substantially axial direction and radially until it opens into the axial cavity 122a.

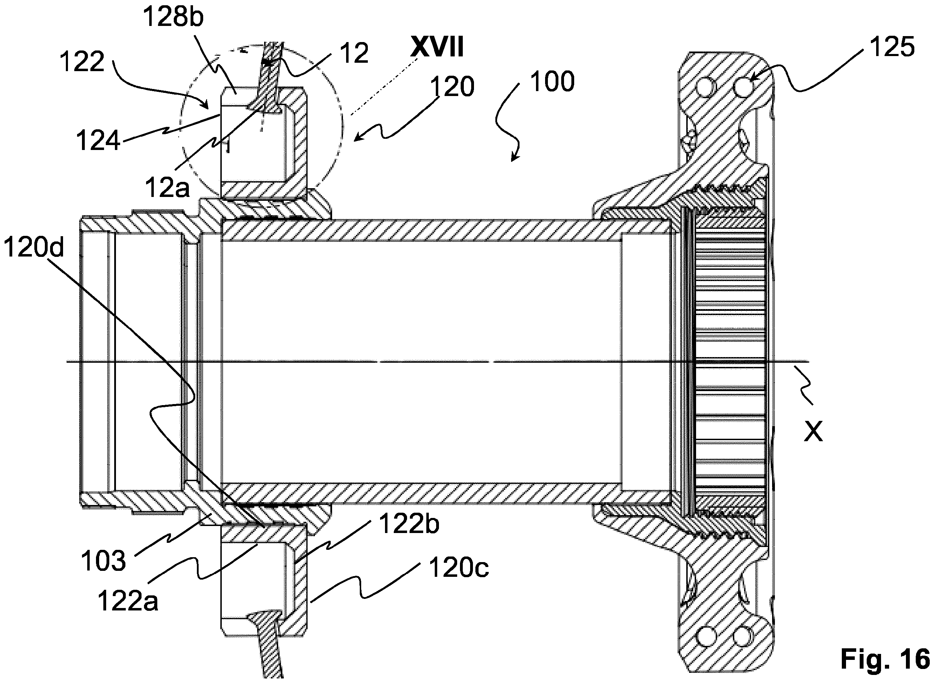

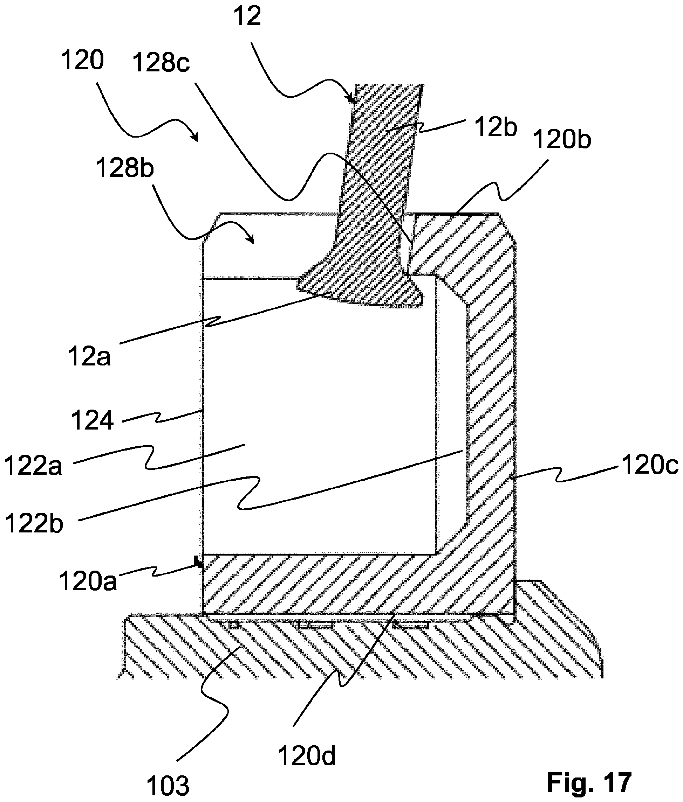

The spoke 12 is introduced/extracted into/from the seat 122 by inserting/extracting the elongated body 12b through the slot 128b and the enlarged head 12a through the front opening 124. Following the tensioning of the spoke 12, the enlarged head 12a abuts on the radially outer surface of the axial cavity 122a (figure 16 and 17).

In this case, the camber angle of the spokes 12 of the bicycle wheel can be lower than that of the spokes mounted on the flange 120 of the hub 100 of figure 12, for example equal to that of the spokes mounted on the flange 120 of the hub 100 of figure 7.

A brake disc can be associated with the hub 100 of figure 15 in a position axially adjacent to the front face 120a of the annular body 121.

The flange 120 of figures 15-17 is made starting from the same semi-finished product 220 of figures 1-3.

The only difference with respect to what is described above is the fact that instead of making the through hole 128a, the slot 128b is made. Such a slot 128b is preferably obtained by a milling mechanical processing after the compression molding of the semi-finished product 220. The slot 128b can in any case also be obtained by a molding operation.

Of course, those skilled in the art can bring numerous modifications and variants to the spoke-attachment flange of the present invention, in order to satisfy specific and contingent requirements, all of which are in any case within the scope of protection defined by the following claims.

## Claims

1. Spoke-attachment flange (120) for a hub (100) for a bicycle wheel, said flange (120) comprising an annular body (121) made of a composite material and extending coaxially to a rotation axis (X), said annular body (121) comprising:
- a radially outer annular portion (121a) including a plurality of unidirectional structural fibers incorporated in a polymeric material and oriented along a substantially circumferential direction;
- a plurality of seats (122) configured to house enlarged heads (12a) of spokes (12);
- a plurality of interconnection areas (123) devoid of said seats (122), each of said interconnection areas (123) being circumferentially arranged between two respective seats (122);
**characterized in that** said radially outer annular portion (121a) includes, at each of said seats (122), a number of radially juxtaposed layers of said unidirectional structural fibers greater than the number of layers of said unidirectional structural fibers provided at each of said interconnection areas (123).

2. Flange (120) according to claim 1, wherein said annular body (121) comprises a radially inner annular portion (121b) including at least one first layer of unidirectional structural fibers incorporated in a polymeric material and oriented along a first direction inclined with respect to said rotation axis (X) and at least one second layer of unidirectional structural fibers incorporated in a polymeric material and oriented along a second direction inclined with respect to said rotation axis (X) the opposite way with respect to said first direction.

3. Flange (120) according to claim 2, wherein said annular body (121) comprises an intermediate annular portion (121c) radially arranged between said radially inner annular portion (121b) and said radially outer annular portion (121a) and comprising at least one layer of unidirectional structural fibers incorporated in a polymeric material and oriented along a path comprising first circumferential parts (226) adjacent to said radially inner annular portion (121b), second circumferential parts (227) adjacent to said radially outer annular portion (121a) and third parts (228) which connect said first circumferential parts (226) and second circumferential parts (227), wherein said seats (122) are each defined between one of said second parts (227), two of said third parts (228) and a respective circumferential part of said radially inner annular portion (121b).

4. Flange (120) according to any one of the previous claims, wherein said annular body (121) comprises a rear face (120c) including at least one layer of unidirectional structural fibers incorporated in a polymeric material and oriented along respective substantially radial directions.

5. Flange (120) according to any one of the previous claims, wherein said annular body (121) comprises a plurality of weight-reducing through openings (130), each of which is arranged in a respective interconnection area (123).

6. Flange (120) according to claim 5 when depending from claim 3, wherein said weight-reducing through openings (130) are each defined between one of said first parts (226), two of said third parts (228) and a respective part of said radially outer annular portion (121a).

7. Flange (120) according to any one of the previous claims, wherein each of said seats (122) comprises an axial cavity (122a) configured to house an enlarged head (12a) of a spoke (12), a front opening (124) made on a front face (120a) of said flange (120) and that opens into said axial cavity (122a) and a radially outer opening (128; 128a, 128b) made on said radially outer annular surface (120b) and that opens into said axial cavity (122a).

8. Flange (120) according to claim 7, wherein said first through hole (128) extends in said radially outer annular portion (121a) along a substantially radial direction.

9. Flange (120) according to claim 7 or 8, wherein said radially outer opening is a first through hole (128) having a first diameter such as to allow the passage of said enlarged head (12a) through said first through hole (128) or a second through hole (128a) having a second diameter such as to prevent the passage of said enlarged head (12a) through said second through hole (128a).

10. Flange (120) according to claim 9, wherein, in an axial section of the flange (120), said second through hole (128a) extends in said radially outer annular portion (121a) along a direction inclined with respect to a substantially radial direction by an angle comprised between about 1° and about 15°, and wherein said seats (122) are configured to house spokes (12) with a straight head.

11. Flange (120) according to claim 7, wherein said radially outer opening is a slot (128b) extending from said front face (120a) and having a circumferential width such as to prevent the passage of said enlarged head (12a).

12. Flange (120) according to claim 11, wherein said circumferential width is lower than, or equal to, about 2.5 mm.

13. Flange (120) according to claim 11 or 12, wherein said slot (128b) extends along said radially outer annular surface (120b) in a substantially axial direction.

14. Hub (100) for a bicycle wheel, comprising at least one spoke-attachment flange (120) according to any one of claims 8 to 11, the hub (100) further comprising a plurality of bushes (140) each insertable in a respective axial cavity (122a) through said front opening (124) and movable in said axial cavity (122a) between a first operative position wherein insertion/extraction of said enlarged head (12a) into/from the bush (140) is allowed and a second operative position wherein extraction of said enlarged head (12a) from said seat (122) is prevented, wherein preferably said bush (140) is rotatable in said axial cavity (122a) between said first operative position and said second operative position.

15. Hub (100) according to claim 14, wherein said bush (140) comprises a slit (144) extending along a substantially circumferential direction and comprising a first end portion (144a) configured to allow the insertion/extraction of said enlarged head (12a) into/from the bush (140) and a second end portion (144b) circumferentially opposite to said first end portion (144a) and configured to prevent the extraction of said enlarged head (12a) from the bush (140), wherein when said bush (140) is in the first operative position thereof said through hole (128) is substantially radially aligned with said first end portion (144a) and when said bush (140) is in the second operative position thereof said through hole (128) is substantially radially aligned with said second end portion (144b), wherein preferably said bush (140) comprises a front surface (142a) provided with a housing (142b) configured to house a head of a maneuvering tool, wherein preferably said axial cavity (122a) and said bush (140) have a substantially frusto-conical shape.

## Patentansprüche

1. Speichen-Anbringungsflansch (120) für eine Nabe (100) für ein Rad eines Fahrrades, wobei der Flansch (120) einen ringförmigen Körper (121) umfasst, der aus einem Verbundmaterial besteht und sich koaxial zu einer Drehachse (X) erstreckt, wobei der ringförmige Körper (121) umfasst:
- einen radial außen liegenden ringförmigen Abschnitt (121a), der eine Vielzahl unidirektionaler struktureller Fasern enthält, die in ein Polymermaterial integriert und in einer im Wesentlichen am Umfang entlang verlaufenden Richtung ausgerichtet sind;
- eine Vielzahl von Aufnahmen (122), die zum Aufnehmen vergrößerter Köpfe (12a) von Speichen (12) eingerichtet sind;
- eine Vielzahl von Verbindungsbereichen (123), die frei von den Aufnahmen (122) sind, wobei jeder der Verbindungsbereiche (123) in Umfangsrichtung zwischen zwei entsprechenden Aufnahmen (122) angeordnet ist;
**dadurch gekennzeichnet, dass** der radial außen liegende ringförmige Abschnitt (121a) an jeder der Aufnahmen (122) eine Anzahl radial nebeneinander liegender Schichten der unidirektionalen strukturellen Fasern aufweist, die größer ist als die Anzahl von Schichten der unidirektionalen strukturellen Fasern, die an jedem der Verbindungsbereiche (123) vorhanden sind.

2. Flansch (120) nach Anspruch 1, wobei der ringförmige Körper (121) einen radial innen liegenden ringförmigen Abschnitt (121b) umfasst, der wenigstens eine erste Schicht unidirektionaler struktureller Fasern, die in ein Polymermaterial integriert und in einer ersten Richtung ausgerichtet sind, die in Bezug auf die Drehachse (X) geneigt ist, sowie wenigstens eine zweite Schicht unidirektionaler struktureller Fasern enthält, die in ein Polymermaterial integriert und in einer zweiten Richtung ausgerichtet sind, die in Bezug auf die Drehachse (X) in Bezug auf die erste Richtung entgegengesetzt geneigt ist.

3. Flansch (120) nach Anspruch 2, wobei der ringförmige Körper (121) einen ringförmigen Zwischenabschnitt (121c) umfasst, der radial zwischen dem radial innen liegenden ringförmigen Abschnitt (121b) und dem radial außen liegenden ringförmigen Abschnitt (121a) angeordnet ist und wenigstens eine Schicht unidirektionaler struktureller Fasern umfasst, die in ein Polymermaterial integriert und entlang eines Weges ausgerichtet sind, der erste Umfangsteile (226), die an den radial innen liegenden ringförmigen Abschnitt (121b) angrenzen, zweite Umfangsteile (227), die an den radial außen liegenden ringförmigen Abschnitt (121a) angrenzen, sowie dritte Teile (228) umfasst, die die ersten Umfangsteile (226) und die zweiten Umfangsteile (227) verbinden, wobei die Aufnahmen (122) jeweils zwischen einem der zweiten Teile (227), zwei der dritten Teile (228) und einem entsprechenden Umfangsteil des radial innen liegenden ringförmigen Abschnitts (121b) ausgebildet sind.

4. Flansch (120) nach einem der vorangehenden Ansprüche, wobei der ringförmige Körper (121) eine Rückseite (120c) umfasst, die wenigstens eine Schicht unidirektionaler struktureller Fasern enthält, die in ein Polymermaterial integriert und in entsprechenden im Wesentlichen radialen Richtungen ausgerichtet sind.

5. Flansch (120) nach einem der vorangehenden Ansprüche, wobei der ringförmige Körper (121) eine Vielzahl gewichtsreduzierender Durchgangsöffnungen (130) umfasst, von denen jede in einem entsprechenden Verbindungsbereich (123) angeordnet ist.

6. Flansch (120) nach Anspruch 5, wenn abhängig von Anspruch 3 , wobei die gewichtsreduzierenden Durchgangsöffnungen (130) jeweils zwischen einem der ersten Teile (226), zwei der dritten Teile (228) und einem entsprechenden Teil des radial außen liegenden ringförmigen Abschnitts (121a) ausgebildet sind.

7. Flansch (120) nach einem der vorangehenden Ansprüche, wobei jede der Aufnahmen (122) einen axialen Hohlraum (122a), der zum Aufnehmen eines vergrößerten Kopfes (12a) einer Speiche (12) eingerichtet ist, eine vordere Öffnung (124), die an einer Vorderseite (120a) des Flansches (120) ausgebildet ist und sich in den axialen Hohlraum (122a) hinein öffnet, sowie eine radial außen liegende Öffnung (128; 128a, 128b) umfasst, die an der radial außen liegenden ringförmigen Fläche (120b) ausgebildet ist und sich in den axialen Hohlraum (122a) hinein öffnet.

8. Flansch (120) nach Anspruch 7, wobei sich das erste Durchgangsloch (128) in dem radial außen liegenden ringförmigen Abschnitt (121a) in einer im Wesentlichen radialen Richtung erstreckt.

9. Flansch (120) nach Anspruch 7 oder 8, wobei die radial außen liegende Öffnung ein erstes Durchgangsloch (128), das einen ersten Durchmesser hat, der den Durchgang des vergrößerten Kopfes (12a) durch das erste Durchgangsloch (128) zulässt, oder ein zweites Durchgangsloch (128a) ist, das einen zweiten Durchmesser hat, der den Durchgang des vergrößerten Kopfes (12a) durch das zweite Durchgangsloch (128a) verhindert.

10. Flansch (120) nach Anspruch 9, wobei sich in einem Axialschnitt durch den Flansch (120) das zweite Durchgangsloch (128a) in dem radial außen liegenden ringförmigen Abschnitt (121a) in einer Richtung erstreckt, die in Bezug auf eine im Wesentlichen radiale Richtung um einen Winkel geneigt ist, der zwischen ungefähr 1° und ungefähr 15° liegt, und wobei die Aufnahmen (122) so eingerichtet sind, dass sie Speichen (12) mit einem geraden Kopf aufnehmen.

11. Flansch (120) nach Anspruch 7, wobei die radial außen liegende Öffnung ein Schlitz (128b) ist, der sich von der Vorderseite (120a) aus erstreckt und eine Breite in Umfangsrichtung hat, die den Durchgang des vergrößerten Kopfes (12a) verhindert.

12. Flansch (120) nach Anspruch 11, wobei die Breite in Umfangsrichtung weniger als oder ungefähr 2,5 mm beträgt.

13. Flansch (120) nach Anspruch 11 oder 12, wobei sich der Schlitz (128b) in einer im Wesentlichen axialen Richtung entlang der radial außen liegenden ringförmigen Fläche (120b) erstreckt.

14. Nabe (100) für ein Rad eines Fahrrades, die wenigstens einen Speichen-Anbringungsflansch (120) nach einem der Ansprüche 8 bis 11 umfasst, wobei die Nabe (100) des Weiteren eine Vielzahl von Buchsen (140) aufweist, die jeweils über die vordere Öffnung (124) in einen entsprechenden axialen Hohlraum (122a) eingeführt werden können und in dem axialen Hohlraum (122a) zwischen einer ersten Funktionsposition, in der Einführen/Herausziehen des vergrößerten Kopfes (12a) in die/aus der Buchse (140) zugelassen wird, und einer zweiten Funktionsposition bewegt werden können, in der Herausziehen des vergrößerten Kopfes (12a) aus der Aufnahme (122) verhindert wird, und vorzugsweise die Buchse (140) in dem axialen Hohlraum (122a) zwischen der ersten Funktionsposition und der zweiten Funktionsposition gedreht werden kann.

15. Nabe (100) nach Anspruch 14, wobei die Buchse (140) einen Schlitz (144) umfasst, der sich in einer im Wesentlichen am Umfang entlang verlaufenden Richtung erstreckt und einen ersten Endabschnitt (144a), der so ausgeführt ist, dass er das Einführen/Herausziehen des vergrößerten Kopfes (12a) in die/aus der Buchse (140) zulässt, sowie einen zweiten Endabschnitt (144b) umfasst, der dem ersten Endabschnitt (144a) in Umfangsrichtung gegenüberliegt und so ausgeführt ist, dass er das Herausziehen des vergrößerten Kopfes (12a) aus der Buchse (140) verhindert, wobei, wenn sich die Buchse (140) in ihrer ersten Funktionsposition befindet, das Durchgangsloch (128) im Wesentlichen radial auf den ersten Endabschnitt (144a) ausgerichtet ist, und wenn sich die Buchse (140) in ihrer zweiten Funktionsposition befindet, das Durchgangsloch (128) im Wesentlichen radial auf den zweiten Endabschnitt (144b) ausgerichtet ist, wobei die Buchse (140) vorzugsweise eine Vorderseite (142a) umfasst, die mit einer Aufnahme (142b) versehen ist, die zum Aufnehmen eines Kopfes eines Einstellwerkzeugs eingerichtet ist, und der axiale Hohlraum (122a) sowie die Buchse (140) vorzugsweise im Wesentlichen kegelstumpfförmig sind.

## Revendications

1. Bride de fixation de rayon (120) pour un moyeu (100) d'une roue de bicyclette, ladite bride (120) comprenant un corps annulaire (121) constitué d'un matériau composite et s'étendant de manière coaxiale par rapport à un axe de rotation (X), ledit corps annulaire (121) comprenant :
- une partie annulaire radialement extérieure (121a) incluant une pluralité de fibres structurelles unidirectionnelles incorporées dans un matériau polymère et orientées le long d'une direction sensiblement circonférentielle ;
- une pluralité de sièges (122) configurés pour loger des têtes élargies (12a) de rayons (12) ;
- une pluralité de zones d'interconnexion (123) dénuées desdits sièges (122), chacune desdites zones d'interconnexion (123) étant agencée de manière circonférentielle entre deux sièges respectifs (122) ;
**caractérisée en ce que** ladite partie annulaire radialement extérieure (121a) inclut, au niveau de chacun desdits sièges (122), un certain nombre de couches juxtaposées radialement desdites fibres structurelles unidirectionnelles supérieur au nombre de couches desdites fibres structurelles unidirectionnelles prévu au niveau de chacune desdites zones d'interconnexion (123).

2. Bride (120) selon la revendication 1, dans laquelle ledit corps annulaire (121) comprend une partie annulaire radialement intérieure (121b) incluant au moins une première couche de fibres structurelles unidirectionnelles incorporées dans un matériau polymère et orientées le long d'une première direction inclinée par rapport audit axe de rotation (X) et au moins une deuxième couche de fibres structurelles unidirectionnelles incorporées dans un matériau polymère et orientées le long d'une deuxième direction inclinée par rapport audit axe de rotation (X) de manière opposée par rapport à ladite première direction.

3. Bride (120) selon la revendication 2, dans laquelle ledit corps annulaire (121) comprend une partie annulaire intermédiaire (121c) radialement agencée entre ladite partie annulaire radialement intérieure (121b) et ladite partie annulaire radialement extérieure (121a) et comprenant au moins une couche de fibres structurelles unidirectionnelles incorporées dans un matériau polymère et orientées le long d'une trajectoire comprenant des premières parties circonférentielles (226) adjacentes à ladite partie annulaire radialement intérieure (121b), des deuxièmes parties circonférentielles (227) adjacentes à ladite partie annulaire radialement extérieure (121a) et des troisièmes parties (228) qui relient lesdites premières parties circonférentielles (226) et deuxièmes parties circonférentielles (227), où lesdits sièges (122) sont chacun définis entre l'une desdites deuxièmes parties (227), deux desdites troisièmes parties (228) et une partie circonférentielle respective de ladite partie annulaire radialement intérieure (121b).

4. Bride (120) selon l'une quelconque des revendications précédentes, dans laquelle ledit corps annulaire (121) comprend une face arrière (120c) incluant au moins une couche de fibres structurelles unidirectionnelles incorporées dans un matériau polymère et orientées le long de directions sensiblement radiales respectives.

5. Bride (120) selon l'une quelconque des revendications précédentes, dans laquelle ledit corps annulaire (121) comprend une pluralité d'ouvertures traversantes pour réduction de masse (130), dont chacune est agencée dans une zone d'interconnexion respective (123).

6. Bride (120) selon la revendication 5, lorsqu'elle dépend de la revendication 3, dans laquelle lesdites ouvertures traversantes pour réduction de masse (130) sont chacune définies entre l'une desdites première parties (226), deux desdites troisièmes parties (228) et une partie respective de ladite partie annulaire radialement extérieure (121a).

7. Bride (120) selon l'une quelconque des revendications précédentes, dans laquelle chacun desdits sièges (122) comprend une cavité axiale (122a) configurée pour loger une tête élargie (12a) d'un rayon (12), une ouverture avant (124) ménagée sur une face avant (120a) de ladite bride (120) et qui s'ouvre dans ladite cavité axiale (122a) et une ouverture radialement extérieure (128; 128a, 128b) ménagée sur ladite surface annulaire radialement extérieure (120b) et qui s'ouvre dans ladite cavité axiale (122a).

8. Bride (120) selon la revendication 7, dans laquelle ledit premier trou traversant (128) s'étend dans ladite partie annulaire radialement extérieure (121a) le long d'une direction sensiblement radiale.

9. Bride (120) selon la revendication 7 ou 8, dans laquelle ladite ouverture radialement extérieure est un premier trou traversant (128) présentant un premier diamètre tel à permettre le passage de ladite tête élargie (12a) à travers ledit premier trou traversant (128) ou un deuxième trou traversant (128a) présentant un deuxième diamètre tel à empêcher le passage de ladite tête élargie (12a) à travers ledit deuxième trou traversant (128a).

10. Bride (120) selon la revendication 9, dans laquelle, dans une section axiale de la bride (120), ledit deuxième trou traversant (128a) s'étend dans ladite partie annulaire radialement extérieure (121a) le long d'une direction inclinée par rapport à une direction sensiblement radiale d'un angle compris entre environ 1° et environ 15°, et où lesdits sièges (122) sont configurés pour loger des rayons (12) ayant une tête droite.

11. Bride (120) selon la revendication 7, dans laquelle ladite ouverture radialement extérieure est une fente (128b) s'étendant depuis ladite face avant (120a) et présentant une largeur circonférentielle telle à empêcher le passage desdites têtes élargies (12a).

12. Bride (120) selon la revendication 11, dans laquelle ladite largeur circonférentielle est inférieure, ou égale, à environ 2,5 mm.

13. Bride (120) selon la revendication 11 ou 12, dans laquelle ladite fente (128b) s'étend le long de ladite surface annulaire radialement extérieure (120b) dans une direction sensiblement axiale.

14. Moyeu (100) pour une roue de bicyclette, comprenant au moins une bride de fixation de rayon (120) selon l'une quelconque des revendications 8 à 11, le moyeu (100) comprenant en outre une pluralité de douilles (140) chacune insérables dans une cavité axiale respective (122a) à travers ladite ouverture avant (124) et pouvant être déplacées dans ladite cavité axiale (122a) entre une première position fonctionnelle où l'insertion/l'extraction de ladite tête élargie (12a) dans/hors de la douille (140) est possible et une deuxième position fonctionnelle où l'extraction de ladite tête élargie (12a) hors dudit siège (122) est empêchée, où de préférence ladite douille (140) peut être pivotée dans ladite cavité axiale (122a) entre ladite première position fonctionnelle et ladite deuxième position fonctionnelle.

15. Moyeu (100) selon la revendication 14, dans lequel ladite douille (140) comprend une fente (144) s'étendant le long d'une direction sensiblement circonférentielle et comprenant une première partie d'extrémité (144a) configurée pour permettre l'insertion/l'extraction de ladite tête élargie (12a) dans/hors de la douille (140) et une deuxième partie d'extrémité (144b) opposée de manière circonférentielle à ladite première partie d'extrémité (144a) et configurée pour empêcher l'extraction de ladite tête élargie (12a) hors de la douille (140), où lorsque ladite douille (140) se trouve dans la première position fonctionnelle de celle-ci, ledit trou traversant (128) est sensiblement aligné de manière radiale avec ladite première partie d'extrémité (144a) et lorsque ladite douille (140) se trouve dans la deuxième position fonctionnelle de celle-ci, ledit trou traversant (128) est sensiblement aligné de manière radiale avec ladite deuxième partie d'extrémité (144b), où de préférence ladite douille (140) comprend une surface avant (142a) dotée d'un logement (142b) configuré pour loger une tête d'un outil de manœuvre, où de préférence ladite cavité axiale (122a) et ladite douille (140) présentent une forme sensiblement tronconique.
